# EUROPEAN PATENT APPLICATION

(11) **EP 1 914 750 A1**
(43) Date of publication of application: **23.04.2008**
(21) Application number: 07117084.9
(22) Date of filing: 24.09.2007
(51) Int. Cl.: G11B 20/00

(54) **Playback apparatus and key management method**

(30) Priority: 17.10.2006 JP 2006282805
(71) Applicant: Kabushiki Kaisha Toshiba, Minato-ku, Tokyo 105-8001 (JP)
(72) Inventor: Tobita, Yoshikata, Tokyo 105-8001 (JP)
(74) Representative: Henkel, Feiler & Hänzel

(57) **Abstract**

According to one embodiment, a playback apparatus includes a memory (113), a key deriving unit (111) which derives first key information for decrypting the encrypted data, and a decrypting unit (112) which decrypts the encrypted data by using the first key information derived by the key deriving unit. the key deriving unit produces second key information from specific information which the key deriving unit and the decrypting unit hold as a result of mutual authentication, encrypts the first key information by using the second key information, and stores the encrypted first key information into the memory. the decrypting unit reads the encrypted first key information from the memory, produces the second key information from the specific information, and decrypts the first key information by using the second key information.

## Description

One embodiment of the invention relates to a key management technique that is suitable for use in a playback apparatus incorporating a decryption circuit that has no key deriving function.

In recent years, the technique of digital compression encoding of moving pictures has advanced. Along with the advancement of this technique, playback apparatuses (players) are being developed that can process video signals of the high definition (HD) standard.

In most cases, content encoded by digital compression is encrypted so that its use is limited to only authenticated users, thereby protecting the copyright pertaining to it. Various methods of encrypting such content have been proposed thus far. (See, for example, Jpn. Pat. Appln. KOKAI Publication No. 2001-111541.)

The method disclosed in Jpn. Pat. Appln. KOKAI Publication No. 2001-111541 refers to encryption of any content that will be distributed on public lines, thereby to protect the content. The key information for decoding the encrypted content must be protected, with great care, against so-called hackers, not only if the content is distributed on public lines, but also if it is transmitted and received within an apparatus.

In a high-definition digital versatile disc (HD DVD) player, for example, at least one key information set (encrypted) for decoding encrypted data items is stored, together with the encrypted data items, in a disc, a storage device provided in the HD DVD player or a network server.

Therefore, the key information set related to the content must be decrypted in order to play back the content stored in the HD DVD.

When one piece of content is switched to another that should be played back, the key information set related to the content must be switched, in some cases, to the key information set related to the other piece of content.

Further, if the key information set to be used is found to be inappropriate, it must be switched back to the key information set previously used.

An object of the present invention is to provide a playback apparatus for playing back encrypted content, in which the key information set for decrypting any encrypted data is decrypted (thus performing a key deriving function) by using software, and the encrypted data is decrypted by a dedicated LSI. The apparatus is configured to switch the key information set to another or back to the previously used key information set at high speed and with high versatility in accordance with the situation in which a user uses the playback apparatus, without disclosing the switching of key information sets to hackers.

To achieve the object, a playback apparatus which plays back encrypted data, comprises a memory, key deriving means for deriving first key information for decrypting the encrypted data, and decrypting means for decrypting the encrypted data by using the first key information derived by the key deriving means, the key deriving means including means for performing mutual authentication with the decrypting means, and means for producing second key information from specific information which the key deriving means and the decrypting means hold as a result of the mutual authentication, encrypting the first key information by using the second key information, and storing the encrypted first key information into the memory, the decrypting means including means for performing mutual authentication with the key deriving means, and means for reading the encrypted first key information from the memory, producing the second key information from the specific information, and decrypting the first key information by using the second key information.

In the playback apparatus according to this invention, the key information set used to decrypt any encrypted data is decrypted by a dedicated LSI. Thus, any key information set can be switched to another or back to the previously used key information set, at high speed and with high versatility in accordance with the present usage situation, without disclosing the switching of key information sets to hackers.

The invention can be more fully understood from the following detailed description when taken in conjunction with the accompanying drawings, in which:
FIG. 1 is an exemplary diagram showing a configuration of a playback apparatus (HD VDV player) according to a first embodiment of the present invention;
FIG. 2 is an exemplary diagram showing the functions that a content checking unit performs to decrypt a digital content, in the HD DVD player according to the first embodiment;
FIG. 3 is an exemplary diagram showing a physical structure of the data stored in an HD DVD;
FIG. 4 is an exemplary diagram illustrating the structure of encrypted digital content;
FIG. 5 is an exemplary diagram depicting how various data items flow in the HD DVD player according to the first embodiment, while the HD DVD player is playing back digital content;
FIGS. 6A and 6B are exemplary timing chart showing a sequence of operations that a key deriving utility and a content decrypting LSI perform to play back digital content in the HD DVD player according to the first embodiment;
FIGS. 7A and 7B are exemplary timing chart showing a sequence of operations that a key deriving utility and a content decrypting LSI perform to play back digital content in an HD DVD player according to a second embodiment of the present invention;
FIGS. 8A and 8B are exemplary timing chart showing a sequence of operations that a key deriving utility and a content decrypting LSI perform to play back digital content in an HD DVD player according to a third embodiment of the present invention;
FIG. 9 is an exemplary diagram depicting how various data items flow in a HD DVD player according to a fourth embodiment of the present invention, while the HD DVD player is playing back a digital content;
FIGS. 10A and 10B are exemplary timing chart showing a sequence of operations that a key deriving utility and a content decrypting LSI perform to play back digital content in the HD DVD player according to the fourth embodiment of the present invention; and
FIGS. 11A and 11B are exemplary timing chart showing a sequence of operations that a key deriving utility and a content decrypting LSI perform to play back digital content in an HD DVD player according to a fifth embodiment of the present invention.

Various embodiments according to the invention will be described hereinafter with reference to the accompanying drawings.

### (First Embodiment)

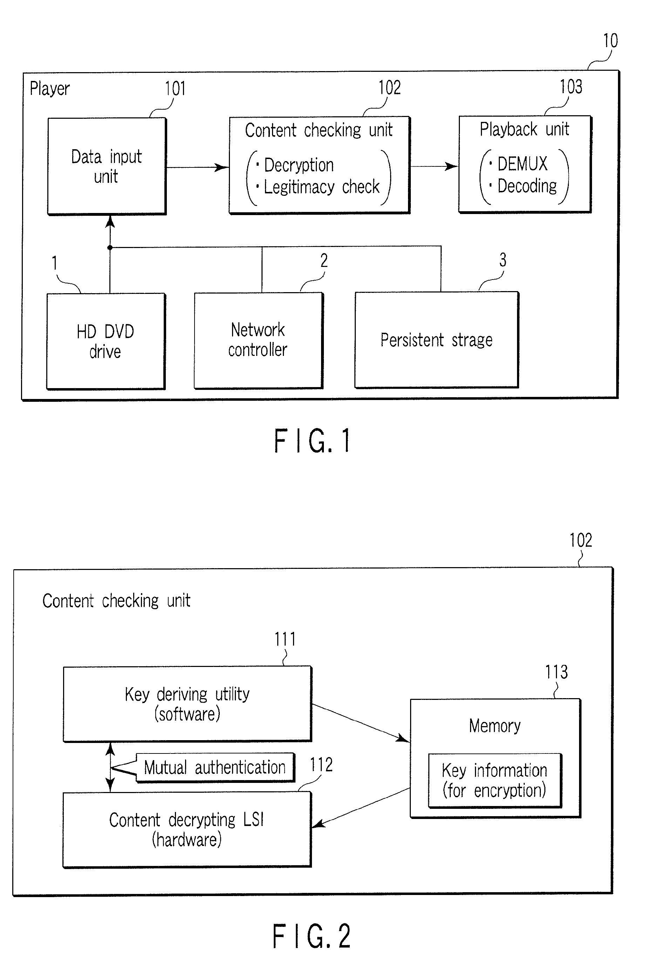

FIG. 1 shows the configuration of a playback apparatus according to the first embodiment of the present invention. The playback apparatus is a player that plays back digital content, each piece of which is composed of a data stream such as audio-visual data. The playback apparatus is an HD DVD player 10 that plays back digital content recorded in storage media such as high-definition digital versatile discs (HD DVDs) .

As shown in FIG. 1, the HD DVD player 10 comprises an HD DVD drive 1, a network controller 2, a persistent storage 3, a data input unit 101, a content checking unit 102, and a playback unit 103.

The HD DVD drive 1 may read digital content from an optical disc medium (HD DVD medium). The network controller 2 may received digital content downloaded from a server via a network such as the Internet. The digital content is audio-visual content, such as a movie or an animation.

The digital content contains a plurality of video objects including enhanced video objects defined by the HD DVD standard (e.g., primary-end enhanced video object (P-EVOB) and secondary-end enhanced video object (S-EVOS)). Each of the video objects is composed of a plurality of video object units (e.g., primary-end enhanced video object units (P-EVOBUs) or secondary-end enhanced video object units (S-EVOBUs). Each video object unit is a data group that corresponds to a prescribed playback-time unit and contains video data and audio data, both compressed and encoded. The digital content has been encrypted, in units of video object units (i.e., P-EVOSUs and the S-EVOBUs).

The data input unit 101 receives video object units and various other data items from the HD DVD drive 1 or the network controller 2. The other data items include key information for decrypting the video object units.

The content checking unit 102 is configured to perform the copyright protecting function defined by the Advanced Access Content System (AACS). More specifically, the content checking unit 102 decodes (decrypts) any digital content input from the data input unit 101 and checks the digital content for its legitimacy.

The playback unit 103 performs the process of playing back the digital content that has been decrypted and legitimated by the content checking unit 102. The playback unit 103 includes a demultiplexer (DEMUX) and a decoder. The demultiplexer divides a video object unit, such as P-EVOBU or S-EVOBU, into navigation data, video data and audio data. The decoder decodes the navigation data, video data and audio data output from the demultiplexer.

FIG. 2 shows the functions that the content checking unit 102 performs to decrypt digital content.

The content checking unit 102 has a key deriving utility 111, a content decrypting LSI 112, and a volatile memory 113. The key deriving utility 111 and content decrypting LSI 112, which are software and hardware, respectively, cooperate to decrypt any content input to the content checking unit 102. The key deriving utility 111 acquires key information for decrypting content, from the HD DVD or the server, in order to play back any digital content stored in the HD DVD. To play back any digital content downloaded from the server, the key deriving utility 111 acquires, from the server, the key information for decryption. Naturally, the key information items are acquired in the form of encrypted data. They are stored as encrypted data in the persistent storage 3, too. The process of acquiring the key information items includes decrypting them. This process will be hereinafter referred to as a key deriving function.

The content decrypting LSI 112 decrypts content by using the key information items that the key deriving utility 111 has acquired. That is, the HD DVD player 10 is a playback apparatus that has the content decrypting LSI 112 having no function of deriving keys. In the player 10, the key information items are exchanged between the key deriving utility 111 and the content decrypting LSI 112. Thus, in the HD DVD player 10, the key information items exchanged between the key deriving utility 111 and the content decrypting LSI 112 can be kept secret. This point will be described in detail.

In the HD DVD player 10, two measures are taken to exchange the key information items while keeping them secret. First, the key deriving utility 111 and the content decrypting LSI 112 authenticate each other. Second, by virtue of the mutual authentication, the key deriving utility 111 and the content decrypting LSI 112 use different information items they hold, thereby producing new key information items. The key deriving utility 111 encrypts any acquired key information by using the new key information, and the acquired key information thus encrypted is stored into the volatile memory 113. The content decrypting LSI 112 reads the key information from the volatile memory 113 and decrypts the same by using the new key information. The key information items for decrypting content will be called a key information set, and the key information items for encrypting and decrypting the key information set will be called memory encryption keys, so that they may be distinguished from the key information items for decrypting content.

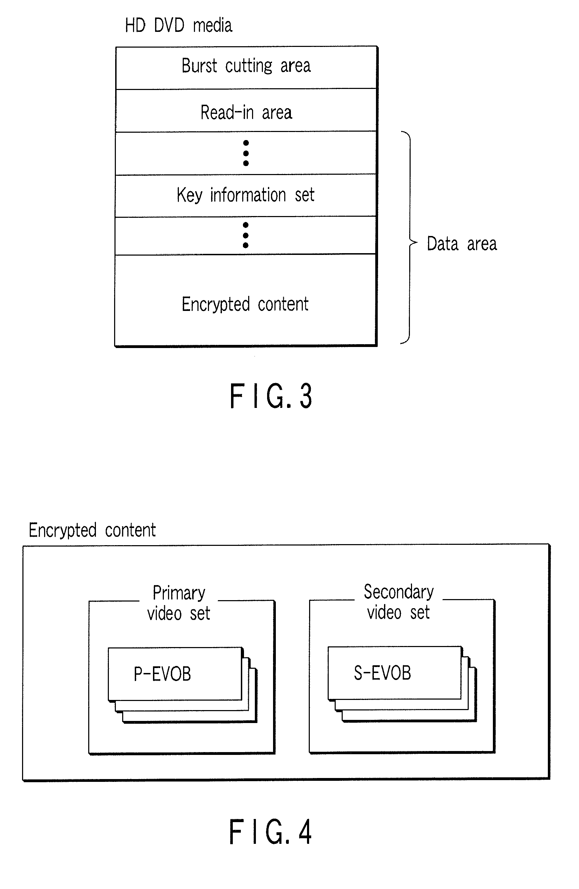

FIG. 3 shows the physical structure the data stored in the HD DVD may take.

The HD DVD has a burst cutting area, a read-in area, and a data area, which are concentrically arranged, from the innermost circumferential part to the outermost circumferential part. In the data area, the key information set and encrypted digital content are recorded.

FIG. 4 illustrates the structure of an encrypted digital content. The HD DVD can store encrypted digital content, each piece of which contains a primary video set and a secondary video set. The primary video set is a title set that contains main video data and main audio data, both compressed and encoded. The primary video set is composed of at least one primary-end enhanced video object (P-EVOB). The P-EVOB is a main AV data stream.

The secondary video set is a video set that is complementary to the primary video set. It is a title set containing sub-video data and sub-audio data, both compressed and encoded. The secondary video set is composed of at least one secondary-end enhanced video object (S-EVOB). The S-EVOB is a sub-AV data stream.

Each enhanced video object (EVOB, either a P-EVOB or an S-EVOB) is composed of a plurality of video object units (EVOBUs). The EVOB has been encrypted in units of video object units. That is, the content checking unit 102 decrypts any input digital content in units of video object units.

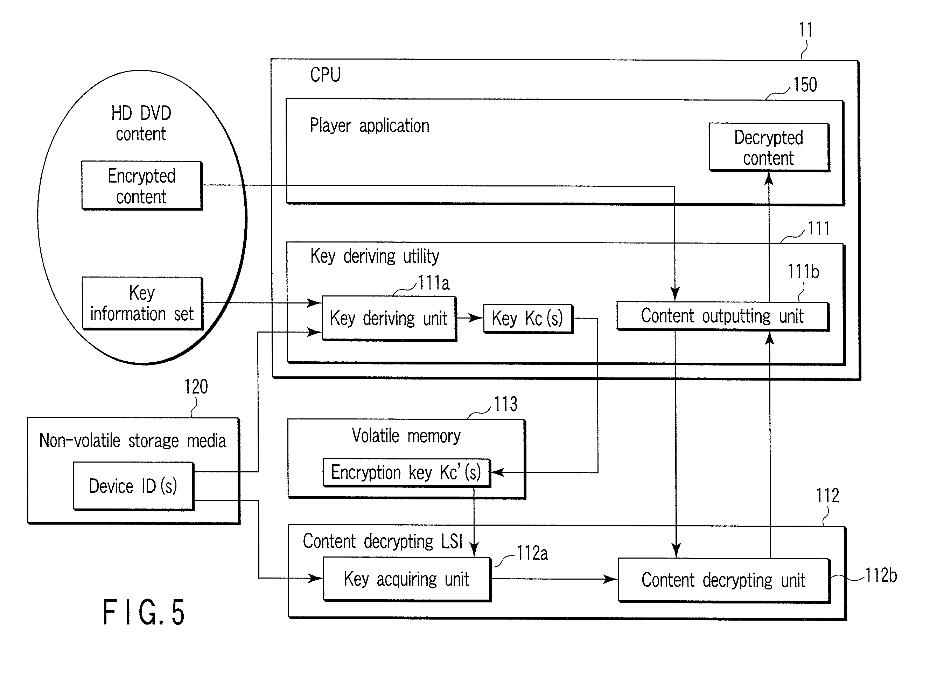

How various data items flow in the HD DVD player 10, while the HD DVD player 10 is playing back a digital content, will be explained with reference to FIG. 5.

To play back digital content, the CPU 11 incorporated in the HD DVD player 10 executes not only the key deriving utility 111, but also player application 150. The player application 150 is software for providing a user interface and the like. The player application 150 is used to display any digital content input to the HD DVD player 10.

An encrypted content acquired from the HDD DVD or the server is transferred to the content decrypting LSI 112 via the key deriving utility 111, in accordance with the player application 150. The content decrypting LSI 112 decrypts the content, which is relayed back to the player application 150 via the key deriving utility 111. To relay the content, the key deriving utility 111 has a content outputting unit 111b. To decrypt the content, the content decrypting LSI 112 has a content decrypting unit 112b.

The key deriving utility 111 acquires a key information set from the HDD DVD, the server or the persistent storage 3. The key deriving utility 111 supplies the key information set to the content decrypting LSI 112 through the volatile memory 113. At this point, the key deriving utility 111 and the content decrypting LSI 112 authenticate each other. In order to achieve this mutual authentication, the key deriving utility 111 acquires the information (device ID) stored in a non-volatile storage media 120 and identifying the HDD DVD player 10. Further, the key deriving utility 111 produces a random number that serves as a so-called one-time password.

The content decrypting LSI 112 also acquires the device ID. When the mutual authentication is achieved, the content decrypting LSI 112 holds the random number the key deriving utility 111 has produced. The key deriving utility 111 uses the random number, the device Id and the secret key already given to it, producing a memory encryption key defined above. Using the memory encryption key, the key deriving utility 111 encrypts the key information set. The key information thus encrypted is stored into the volatile memory 113. Meanwhile, the content decrypting LSI 112 uses the device ID and the secret key (the same key given to the key deriving utility 111), producing a memory encryption key. Using this memory encryption key, the content decrypting LSI 112 encrypts the key information set read from the volatile memory 113. The encrypted key information is thus exchanged between the key deriving utility 111 and the content decrypting LSI 112 via the volatile memory 113. To perform this exchange of the encrypted key information, the key deriving utility 111 and the content decrypting LSI 112 have a key deriving unit 111a and a key acquiring unit 112a, respectively. The key information set acquired by the key acquiring unit 112a is transferred to the key acquiring unit 112a and is then used to decrypt the content.

The key deriving utility 111 and the content decrypting LSI 112 authenticate each other as described above, holding a random number each. Using the random numbers, each of the key deriving utility 111 and the content decrypting LSI 112 produces a memory encryption key. The key information set is exchanged between the key deriving utility 111 and the content decrypting LSI 112, after it has been encrypted by using the memory encryption keys thus produced. Hence, the key information set can be reliably kept secret.

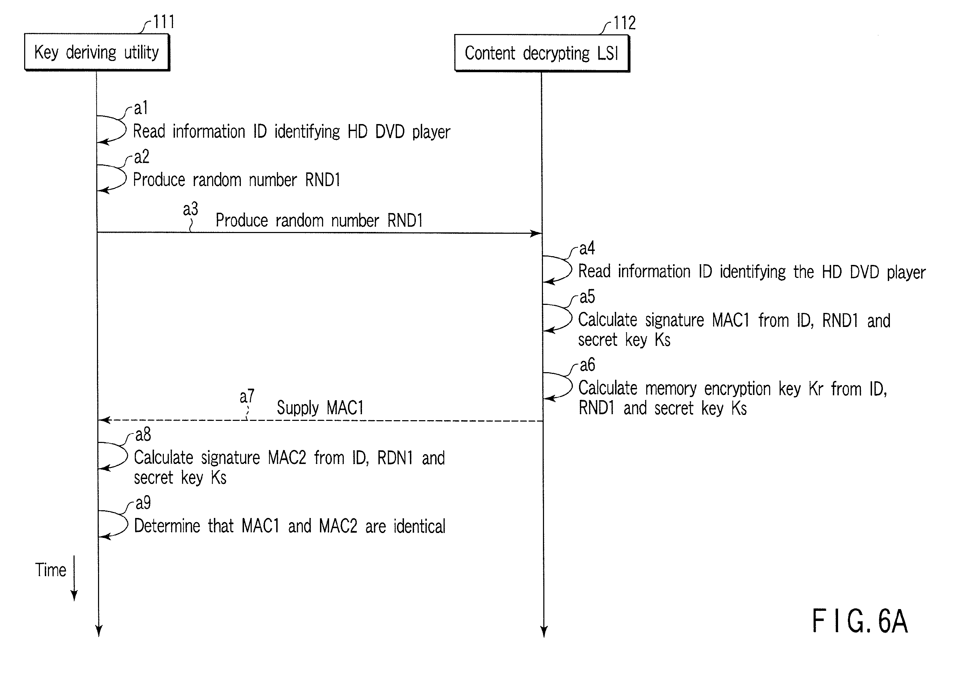

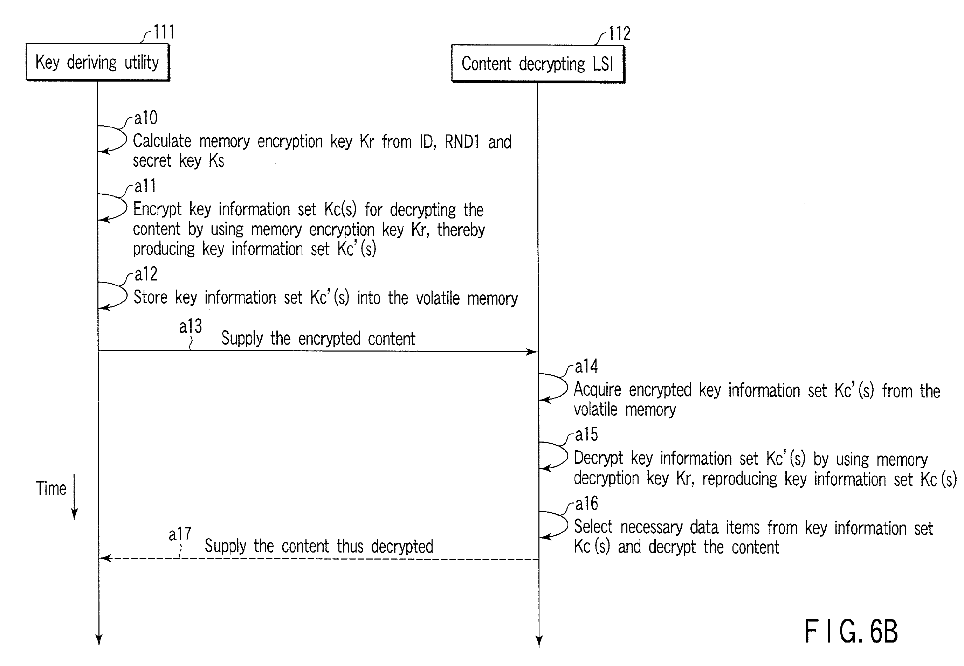

A sequence of operations that the key deriving utility 111 and the content decrypting LSI 112 perform in order to play back digital content in the HD DVD player 10 will be explained, with reference to FIGS. 6A and 6B.

The key deriving utility 111 reads the information ID identifying the HD DVD player 10 (i.e., the device ID stored in the non-volatile storage media 120 (a1 shown in FIG. 6A). The key deriving utility 111 then produces a random number RND1 (a2 shown in FIG. 6A). Further, the key deriving utility 111 supplies the random number RND1 to the content decrypting LSI 112 (a3 shown in FIG. 6A).

Upon receiving the random number RND1, the content decrypting LSI 112 reads the information ID identifying the HD DVD player 10 (a4 shown in FIG. 6A). The content decrypting LSI 112 then calculates a signature MAC1 from the information ID, the random number RND1 and a secret key Ks already input to it, by using a particular formula (a5 shown in FIG. 6A). Further, the content decrypting LSI 112 calculates a memory encryption key Kr from the information ID, the random number RND1 and the secret key Ks (a6 shown in FIG. 6A). The content decrypting LSI 112 then supplies the signature MAC1 to the key deriving utility 111 (a7 shown in FIG. 6A).

The key deriving utility 111 also calculates a signature MAC2 from the information ID, the random number it has produced and the secret key Ks given to it, by using a particular formula (a8 shown in FIG. 6A). The key deriving utility 111 then determines that the signature MAC2 is identical to the signature MAC1 sent from the content decrypting LSI 112 (a9 shown in FIG. 6A). Since the signature MAC2 is identical to the signature MAC1, the mutual authentication is accomplished, whereby the key deriving utility 111 and the content decrypting LSI 112 come to hold two random numbers, respectively, which serve as one-time passwords. When the mutual authentication is achieved, the key deriving utility 111 calculates a memory encryption key Kr, too, from the information ID, the random number RND1 and the secret key Ks (a10 shown in FIG. 6B). Using the memory encryption key Kr, the key deriving utility 111 encrypts a key information set Kc for decrypting the content, producing an information set Kc' (a11 shown in FIG. 6B). The information set Kc' is stored into the volatile memory 113 (a12 shown in FIG. 6B). The key deriving utility 111 then starts supplying the encrypted content to the content decrypting LSI 112 (a13 shown in FIG. 6B).

The content decrypting LSI 112 acquires the encrypted key information set Kc' from the volatile memory 113 (a14 shown in FIG. 6B). The LSI 112 decrypts the key information set Kc' by using the memory decryption key Kr already calculated, reproducing the key information set Kc (a15 shown in FIG. 6B). The LSI 112 then selects necessary data items from the key information set Kc and decrypts the content by using the data items selected (a16 shown in FIG. 6B). Further, the content decrypting LSI 112 supplies the content thus decrypted to the key deriving utility 111 (a17 shown in FIG. 6B).

Thus, the HD DVD player 10 registers the key information in the decryption circuit that has no key deriving function, while keeping the key information secret.

### (Second Embodiment)

A second embodiment of the present invention will be described.

In the HD DVD player 10 according to the first embodiment, described above, any content decrypted by the content decrypting LSI 112 is supplied to the key deriving utility 111. In the HD DVD 10 according to the second embodiment, even the decrypted content is encrypted in a specific way so that not only the key information set, but also the decrypted content may be received and supplied with the highest security.

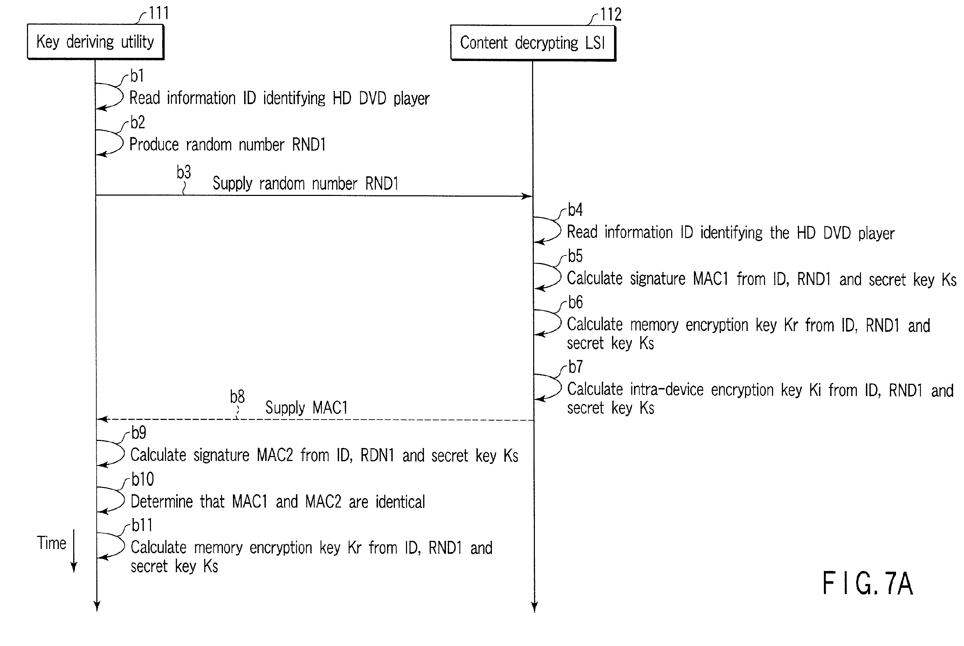

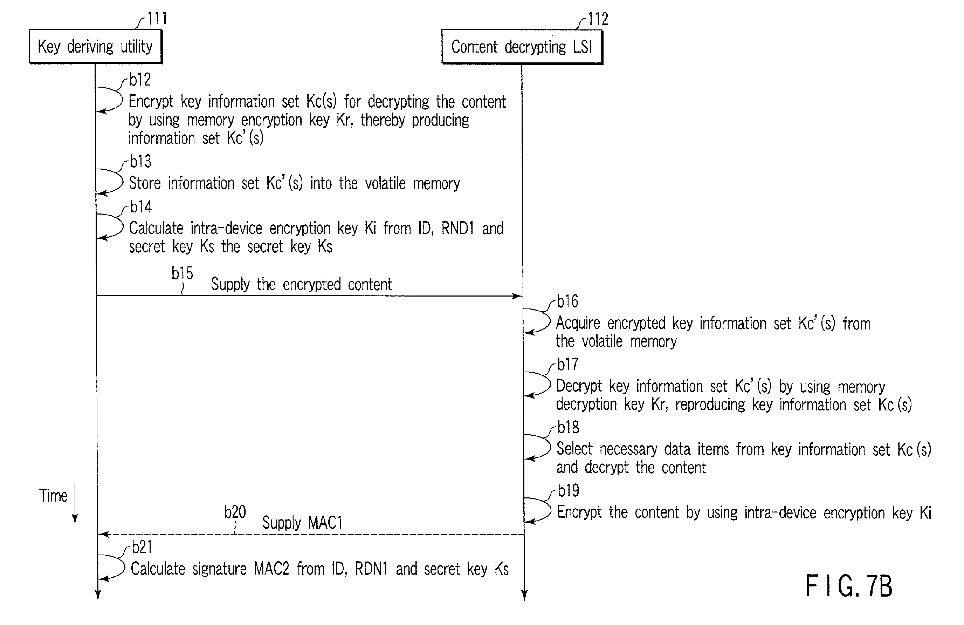

FIGS. 7A and 7B are exemplary timing chart showing a sequence of operations that the key deriving utility 111 and the content decrypting LSI 112 perform to play back digital content in the HD DVD player 10 according to the second embodiment.

Unlike in the HD DVD player 10 according to the first embodiment, the content decrypting LSI 112 calculates an intra-device encryption key Ki from the information ID, the random number RND1 and secret key Ks, by using a particular formula that differs from the formula used in the first embodiment to calculate the memory encryption key Kr, in order to encrypt the decrypted content in the specific way (b7 shown in FIG. 7A). Meanwhile, the key deriving utility 111 also calculates the intra-device encryption key Ki from the information ID, the random number RND1 and the secret key Ks, by using a particular formula (b14 shown in FIG. 7B).

The content decrypting LSI 112 encrypts the decrypted content to be supplied to the key deriving utility 111 by using the intra-device encryption key Ki thus calculated (b19 shown in FIG. 7B). The key deriving utility 111 decrypts the content encrypted by the content decrypting LSI 112 by using the intra-device encryption key Ki (b21 shown in FIG. 7B).

Thus, in the HD DVD player 10 according the second embodiment, any content decrypted can be kept secret while being supplied and received. Unlike the exchange of data between the key deriving utility 111 and the content decrypting LSI 112, which are software and hardware, respectively, the exchange of data (decrypted content) between the key deriving utility 111 and the player application 150, both being software, is achieve through no buses. Hence, no measures need to be taken to secure the decrypted content exchanged between the key deriving utility 111 and the player application 150.

### (Third Embodiment)

A third embodiment of the present invention will be described.

In the HD DVD player 10 according to the second embodiment, the same random number of a specific value is used, as a one-time password, to achieve the mutual authentication and encrypt the key information set, and also to encrypt the decrypted content identical in value. In the HD DVD player 10 according to the third embodiment, two random numbers of different values are produced; one to achieve the mutual authentication and encrypt the key information set, and the other to encrypt the decrypted content. This can secure the decrypted content more reliably.

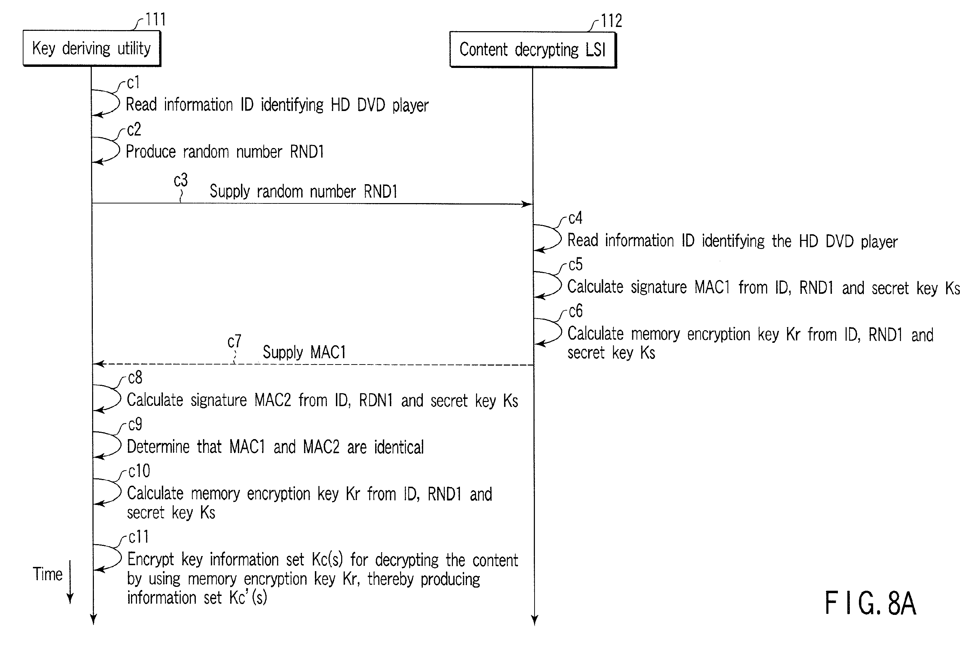

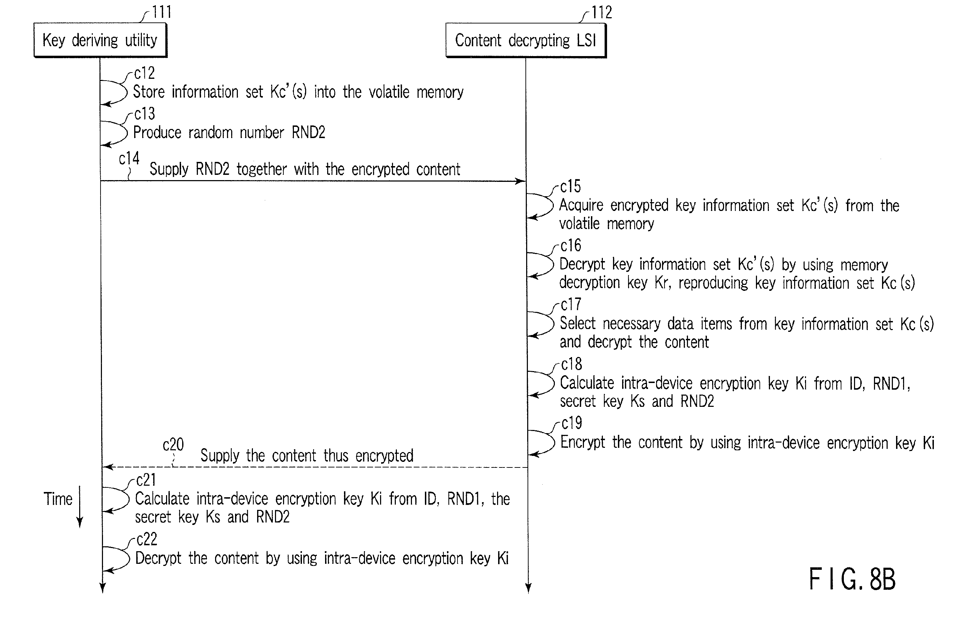

FIGS. 8A and 8B are exemplary timing chart showing a sequence of operations that the key deriving utility 111 and the content decrypting LSI 112 perform to play back digital content in an HD DVD player according to a third embodiment of the present invention.

Unlike in the HD DVD player 10 according to the second embodiment, the key deriving utility 111 produces a random number RND2, other than the random number RND1, so that any content decrypted by using a particular random number may be encrypted (c13 shown in FIG. 8B). More precisely, the random number RND2 is produced after the mutual authentication has been achieved. The random numbers RND2 is supplied to the content decrypting LSI 112, together with the encrypted content (c14 shown in FIG. 8B). Using a particular formula, the content decrypting LSI 112 calculates an intra-device encryption key Ki from the information ID, the random number RND1, the secret key Ks and the random number RND2 supplied from the key deriving utility 111 (c18 shown in FIG. 8B). The key deriving utility 111 also calculates an intra-device encryption key Ki from the information ID, the random number RND1, the secret key Ks and the random number RND2 already calculated (c21 shown in FIG. 8B).

Thus, the decrypted content exchanged between the key deriving utility 111 and the content decrypting LSI 112 can be secured more reliably in the third embodiment.

### (Fourth Embodiment)

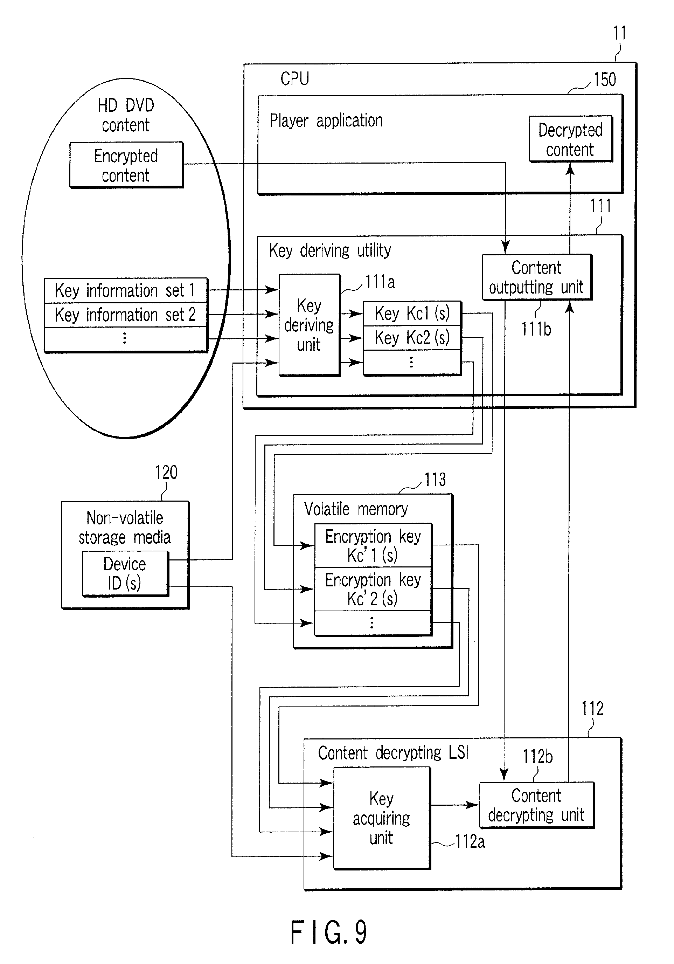

A fourth embodiment of the present invention will be described. FIG. 9 is an exemplary diagram depicting how various data items flow in an HD DVD player according to the fourth embodiment, while the HD DVD player is playing back a digital content.

In the HD DVD player 10 according to the fourth embodiment, the key information set acquired by the key deriving utility 111 to decrypt encrypted content is stored into the volatile memory 113 to be transferred to the content decrypting LSI 112, at a time other than when it was acquired. Rather, it is later stored into the memory 113, together with all other key information sets acquired by the key deriving utility 111. Therefore, the key deriving utility 111 and the volatile memory 113 can inform each other which one of the key information sets thus stored should be used.

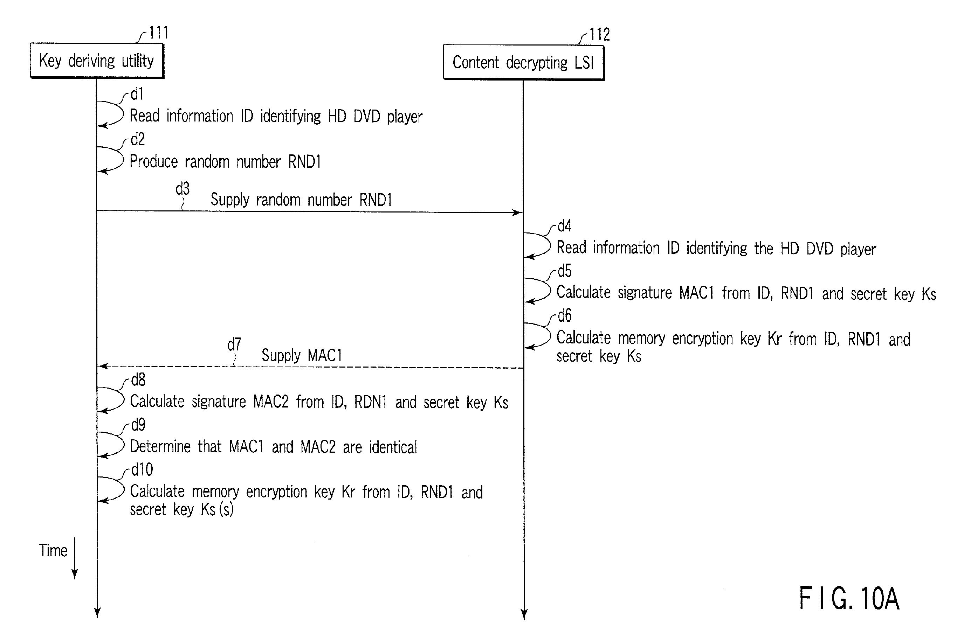

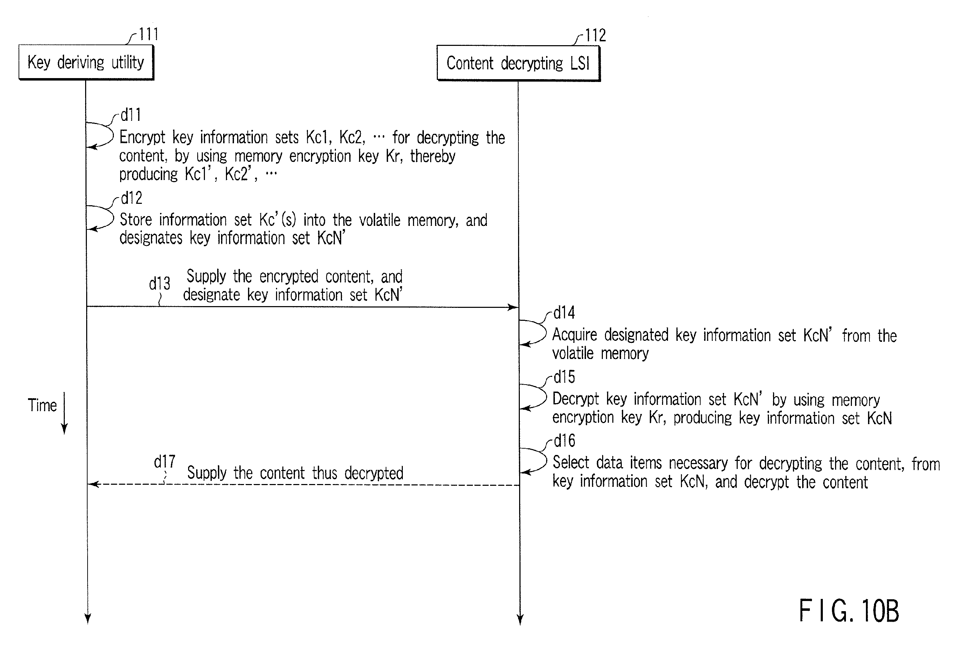

FIGS. 10A and 10B are exemplary timing chart showing a sequence of operations that the key deriving utility 111 and the content decrypting LSI 112 perform to play back digital content in the HD DVD player 10 according to the fourth embodiment.

Unlike in the HD DVD player 10 according to the first embodiment, the key deriving utility 111 encrypts key information sets Kc1, Kc2, ... for decrypting the content, by using the memory encryption key Kr, thereby producing new key information sets Kc1', Kc1', ... (d11 shown in FIG. 10B). The new key information sets Kc1', Kc1', ... are stored into the volatile memory 113, so that a plurality of key information sets may be used at a time (d12 shown in FIG. 10B). When the key deriving utility 111 supplies the encrypted content to the content decrypting LSI 112, it designates one (KcN') of the key information sets to be used to decrypt the content (d13 in FIG. 10B).

The key deriving utility 111 acquires the designated key information set KcN' from the volatile memory 113 (d14 shown in FIG. 10B). The key deriving utility 111 decrypts the key information set KcN' by using the memory encryption key Kr, producing a key information set KcN (d15 shown in FIG. 10B).

To play back data from an HDD DVD, a plurality of key information sets are used, one being switched to another, in accordance with the user's situation. Therefore, in the HD DVD player 10 according to this embodiment, the key information sets are stored in the volatile memory 113. Any one of the key information sets, thus stored, is designated, whereby the switching of key information sets can be accomplished at high speed.

### (Fifth Embodiment)

A fifth embodiment of the present invention will be described.

The HD DVD player 10 according to the fifth embodiment is similar to the HD DVD player 10 according to the fourth embodiment, which can use a plurality of key information sets at a time. Nonetheless, it differs in that any content decrypted is encrypted in a particular manner.

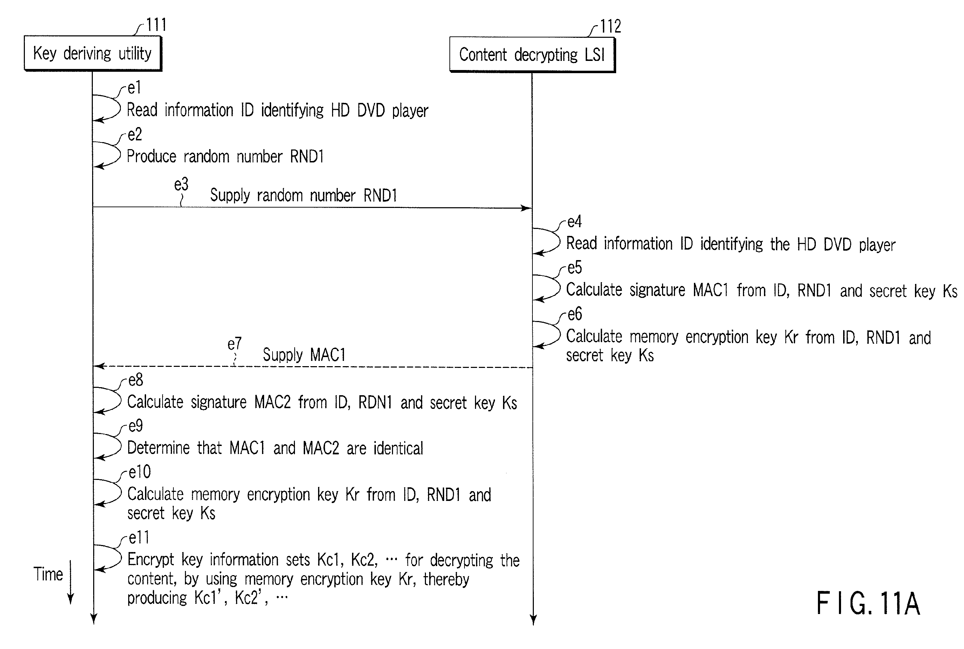

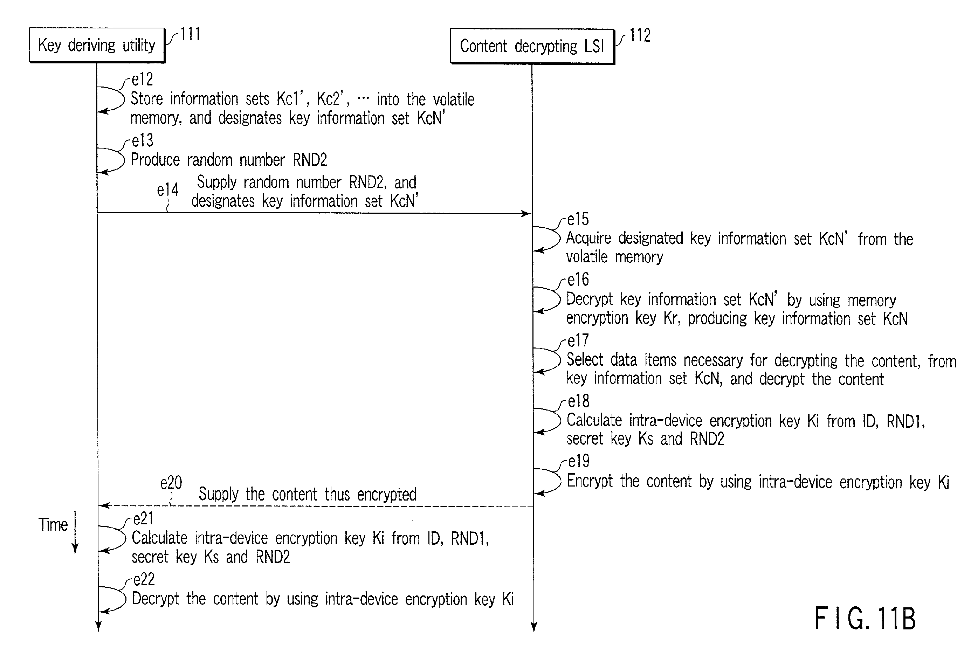

FIGS. 11A and 11B are exemplary timing chart showing a sequence of operations that the key deriving utility 111 and the content decrypting LSI 12 perform to play back digital content in an HD DVD player according to the fifth embodiment.

Unlike in the HD DVD player 10 according to the fourth embodiment, the key deriving utility 111 produces a random number RND2, other than the random number RND1, so that any content decrypted may be encrypted in a particular manner (e13 shown in FIG. 11B). More precisely, the random number RND2 is produced after the mutual authentication has been achieved. The random number RND2 is supplied to the content decrypting LSI 112, while the key deriving utility 111 is designating the key information set KcN' (e14 shown in FIG. 11B).

The content decrypting LSI 112 calculates an intra-device encryption key Ki from the information ID, the random number RND1, the secret key Ks and the random number RND2 supplied from the key deriving utility 111, by using a particular formula (e18 shown in FIG. 11B). Using the intra-device encryption key Ki thus calculated, the LSI 112 then encrypts the decrypted content to be supplied to the key deriving utility 111 (e19 shown in FIG. 11B). The key deriving utility 111 also calculates the intra-device encryption key Ki from the information ID, the random number RND1, the secret key Ks and the random number RND2 already calculated (e21 shown in FIG. 11B). Using the intra-device encryption key Ki, the key deriving utility 111 decrypts the encrypted content (e22 shown in FIG. 11B).

Thus, in the HD DVD player 10 according to the fifth embodiment, not only can the key information sets be switched from one to another at high speed, but also any content decrypted can be kept secret while being supplied and received.

In the embodiments described above, the registering key information is registered in the decryption circuit that has no key deriving function. The use of this method of registering key information is not limited to HDD DVD players. It can be applied to any other electronic apparatus capable of playing back data, such as a cellular telephone.

## Claims

1. A playback apparatus which plays back encrypted data, **characterized by** comprising:
a memory;
key deriving means (111) for deriving first key information for decrypting the encrypted data; and
decrypting means (112) for decrypting the encrypted data by using the first key information derived by the key deriving means,
the key deriving means including:
means for performing mutual authentication with the decrypting means; and
means for producing second key information from specific information which the key deriving means and the decrypting means hold as a result of the mutual authentication, encrypting the first key information by using the second key information, and storing the encrypted first key information into the memory,
the decrypting means including:
means for performing mutual authentication with the key deriving means; and
means for reading the encrypted first key information from the memory, producing the second key information from the specific information, and decrypting the first key information by using the second key information.

2. The playback apparatus according to claim 1, **characterized in that** the key deriving means further includes means for producing a random number as information specific to the mutual authentication, and transmitting the random number to the decrypting means.

3. The playback apparatus according to claim 1, **characterized in that**:
the decrypting means further includes means for producing third key information from information specific to the mutual authentication, encrypting the data decrypted by using the first key information, by using the third key information, and outputting the data encrypted by using the third key information, and
the key deriving means further includes means for producing the third key information from the information specific to the mutual authentication, and decrypting the encrypted data output from the decrypting means by using the third key information.

4. The playback apparatus according to claim 1, **characterized in that**:
the decrypting means further includes means for producing third key information from information specific to the encrypted data transmitted from the key deriving means, encrypting the data decrypted by using the first key information, by using the third key information, and outputting the data encrypted by using the third key information; and
the key deriving means further includes means for producing a random number as information specific to the encrypted data, transmitting the random number to the decrypting unit, producing third key information by using the random number, decrypting the encrypted data output from the decrypting unit, by using the third key information.

5. The playback apparatus according to claim 1, **characterized in that**:
the first key information consists of a plurality of first key information items;
the key deriving means further includes means for giving notification to the decrypting unit, informing which one of the first key information items stored in the memory should be used; and
the decrypting means further includes means for selecting that one of the first key information items stored in the memory, in accordance with the notification given by the key deriving unit.

6. A key management method for use in a playback apparatus (10) which plays back encrypted data, including a memory (113), key deriving means (111) for deriving key information for decrypting the encrypted data, and decrypting means (112) for decrypting the encrypted data by using the key information derived by the key deriving means, the method **characterized by** comprising:
causing (a1-a9) the key deriving means and the decrypting means to perform mutual authentication to authenticate each other by using a random number; and
encrypting (all) the key information by using the random number, and exchanging (a12, a14) the key information, thus encrypted, between the key deriving means and the decrypting means.

7. The key management method according to claim 6, **characterized by** further comprising re-encrypting (b19) data decrypted by using the information specific to the mutual authentication, and exchanging the re-encrypting data between the key deriving means and the decrypting means.

8. The key management method according to claim 6, **characterized by** further comprising producing (c13) a random number for each encrypted data, re-encrypting (c19) decrypted data by using the produced random number, exchanging the re-encrypted data between the key deriving means and the decrypting means.

9. The key management method according to claim 6, the key information consisting of a plurality of key information items, and **characterized by** further comprising causing (d13) the deriving means to inform the decrypting means which one of the key information items should be used.
